# EUROPEAN PATENT SPECIFICATION

(11) **EP 4 302 219 B1**
(45) Date of publication and mention of the grant of the patent: **20.05.2026**
(21) Application number: 22762814.6
(22) Date of filing: 18.01.2022
(51) Int. Cl.: G06F 21/62, G06F 21/64, H04L 9/00, H04L 67/1097

(54) **DATA STORAGE SYSTEM AND DATA STORING METHOD**
DATENSPEICHERSYSTEM UND DATENSPEICHERVERFAHREN
SYSTÈME DE STOCKAGE DE DONNÉES ET PROCÉDÉ DE STOCKAGE DE DONNÉES

(30) Priority: 04.03.2021 US 202163156737 P
(43) Date of publication of application: 10.01.2024
(73) Proprietor: DENSO CORPORATION, Kariya-city, Aichi-pref., 448-8661 (JP)
(72) Inventor: HUANG, Haolun, Kariya-city, Aichi-pref., 448-8661 (JP); XU, Xin, Kariya-city, Aichi-pref., 448-8661 (JP)
(74) Representative: Winter, Brandl - Partnerschaft mbB
(86) International application number: PCT/JP2022/001555
(87) International publication number: WO 2022/185755

(56) References cited:
- EP-A1- 3 779 755
- WO-A1-2020/210405
- WO-A1-2020/219178
- US-A1- 2018 285 839
- US-A1- 2020 326 679

## Description

### [Cross Reference]

### [Technical Field]

The subject matter described herein relates in general to a data storage system, a method for storing data, and a computer-readable non-transitory storage medium storing a computer program

### [Background Art]

Recently, a variety types of enterprises or organizations are facing a demand for sharing data to enhance interconnected business activities. For example, automakers (OEMs) share autonomous driving data for improving its driving performance. Such automakers also store and share vehicle related data such as mileages and repair histories for car recycle business. However, maintaining the balance of data usability and its reliability is one of the most important issues to be overcome.

Blockchain technology has been recently developed to provide a distributed data storage mechanism with a difficulty to illegal or unauthorized change to stored data. For example, Hyperledger Fabric provides limited information channel based sharing system to protect confidential data between multiple consortiums in a blockchain network (see NPL 1). However, the mechanism presented by NPL 1 is not sufficiently flexible for each participant to treat their own data. Thus, there has been a demand for improved data storage system with flexibility in terms of data treatment for each participant entity.

Moreover, US 2020 326679 A1 discloses a system for managing data, wherein a gateway device in communication with one or more connected devices may be configured to receive an energy management signal information and apply one or more policies in connection with the management of the connected devices.

US 2018 0285839 A1 A discloses a data management system for data provenance and data storage that allows multiple independent parties to securely share data, track data provenance, maintain audit logs, keep data synchronized, comply with regulations, and handle permissioning and control who can access the data. Certain instances work both with public blockchains like Bitcoin and Ethereum and with private blockchains.

EP 3779755 A1 discloses a computer-implemented method of enabling data access from a first blockchain network via a second blockchain network, comprising: retrieving the data from the first blockchain network and storing the data in a file system associated with the second blockchain network; retrieving a hash value of the data and storing the hash value on the second blockchain network; and querying the data in the file system and the hash value stored on the second blockchain network to retrieve the data.

### [Citation List]

### [Non Patent Literature]

[NPL 1]
"Hyperledger Fabric: A Distributed Operating System for Permissioned Blockchains" arXiv:1801.10228v2 [cs.DC] 17 Apr 2018

### [Summary of Invention]

This section provides a general summary of the disclosure, and is not a comprehensive disclosure of its full scope or all of its features.

The invention is set out in the appended claims. According to a first aspect of the present disclosure, a data storage system includes a node configured to store a blockchain and a data storage server. The node is further configured to, upon receiving the data from a data source, separate the data into confidential data and public data, obtain a tamper proof of the confidential data, send the separated confidential data to the data storage server, and store the public data and the tamper proof on the blockchain. The data storage server is configured to store the confidential data upon receiving the confidential data from the node.

According to a second aspect of the present disclosure, a method for storing data includes separating data received from a data source into confidential data and public data, obtaining a tamper proof of the confidential data, storing the public data and the tamper proof on a blockchain, and storing the confidential data in a data storage server.

According to a third aspect of the present disclosure, a computer-readable non-transitory storage medium storing a computer program configured to cause at least one processor to separate data received from a data source into confidential data and public data, obtain a tamper proof of the confidential data, store the public data and the tamper proof on a blockchain, and store the confidential data in a data storage server.

### [Brief Description of Drawings]

The accompanying drawings, which are incorporated in and constitute a part of the specification, illustrate various systems, methods, and other embodiments of the disclosure. It will be appreciated that the illustrated element boundaries (e.g., boxes, groups of boxes, or other shapes) in the figures represent one embodiment of the boundaries. In some embodiments, elements may not be drawn to scale.
[FIG. 1]

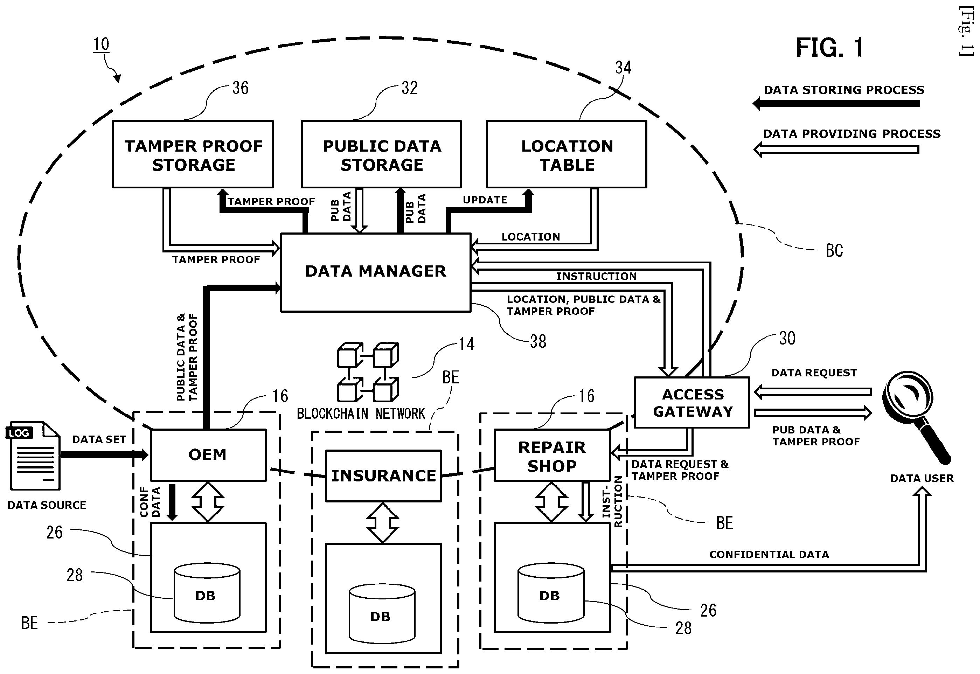

   FIG. 1 schematically illustrates the entire configuration of one embodiment of a data storage system.
[FIG. 2]

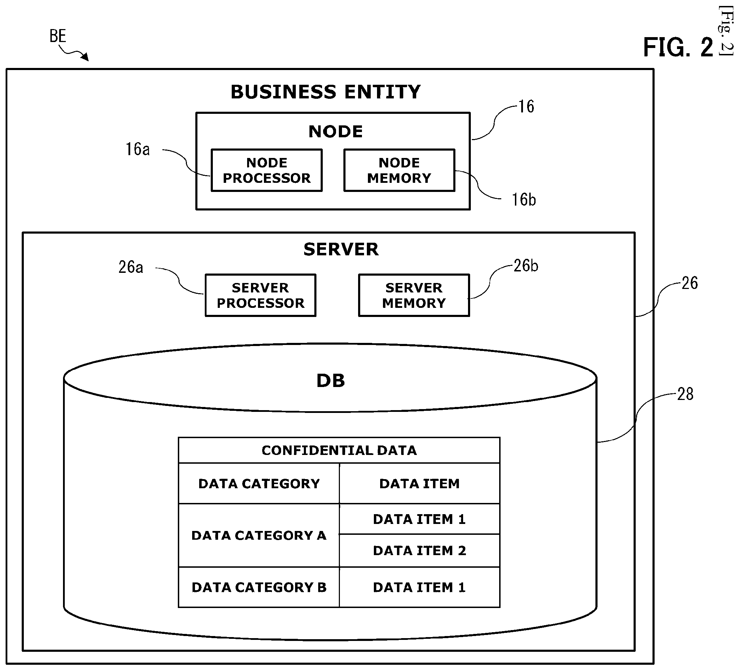

   FIG. 2 illustrates a block diagram of a business entity according to the embodiment.
[FIG. 3]

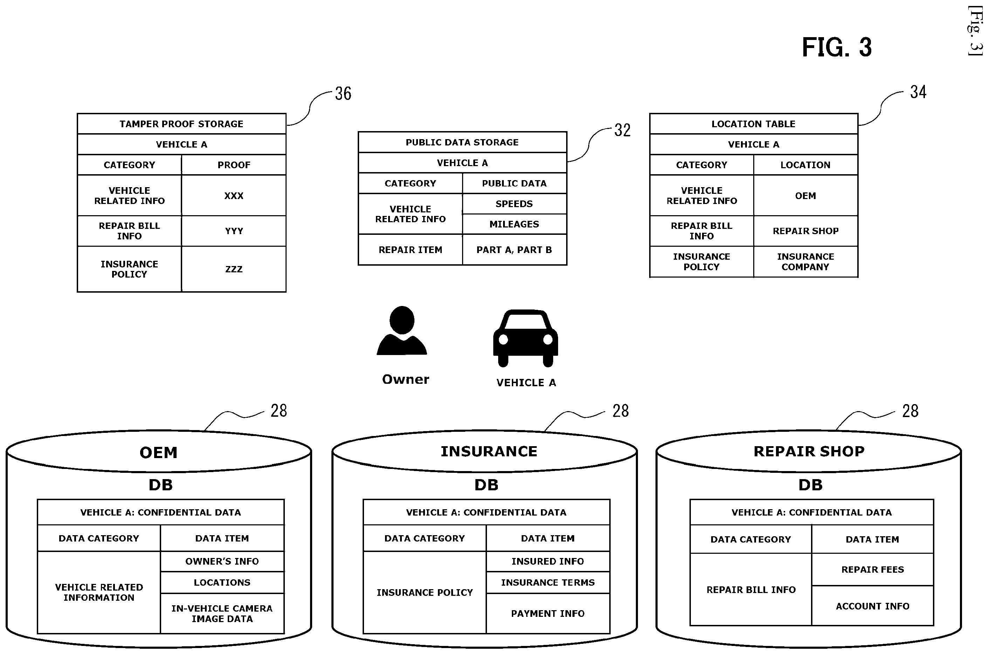

   FIG. 3 is a diagram illustrating an example of confidential data stored in each server and public data, temper proofs, and data locations stored on a blockchain.
[FIG. 4]

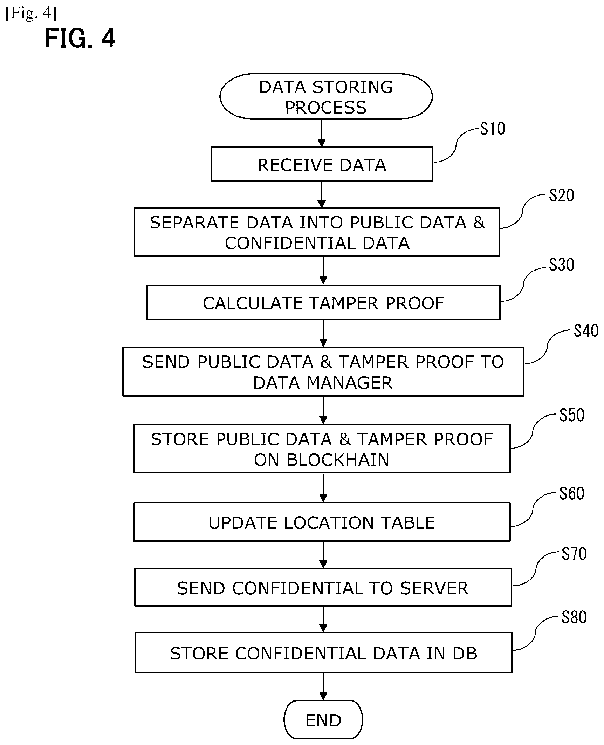

   FIG. 4 shows a flowchart of a data storing process.
[FIG. 5]

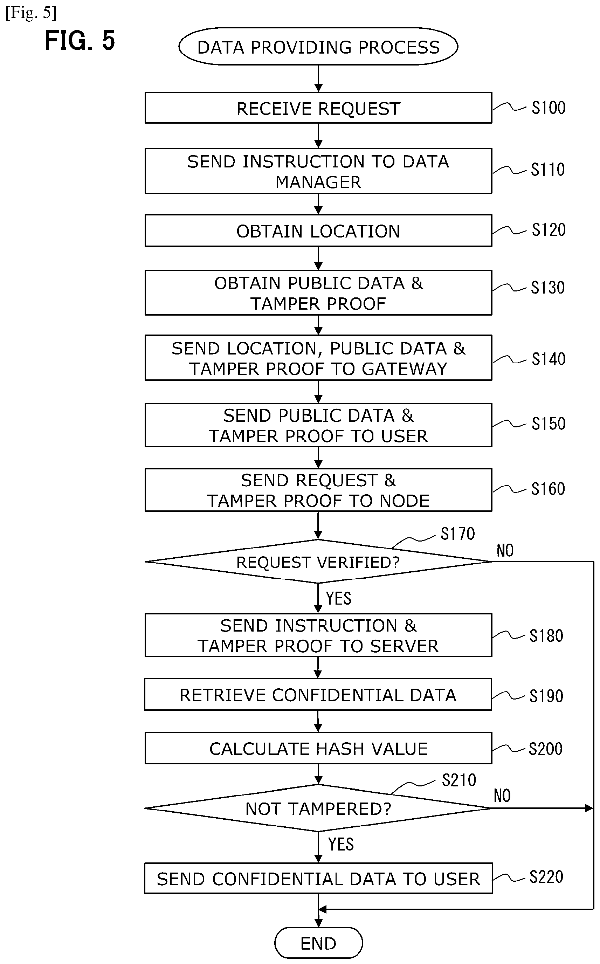

   FIG. 5 shows a flowchart of a data providing process.

### [Description of Embodiments]

Hereinafter, an embodiment of the present disclosure will be described with reference to the drawings.

FIG. 1 shows a diagram schematically illustrating one example of a data storage system (hereinafter, referred to as a "system") 10 according to the present embodiment. The system 10 is configured to store data related to variety types of objects, assets, or things such as cars, motorcycles, smart homes, products, goods, artwork, crops, digital assets, or the like using both on-chain and off-chain layers. Data of such objects is provided from a variety types of data sources such as owners of cars, motorcycles, smart homes, workers or employees of business entities that constitute the system 10, and so on. The system 10 is also configured to provide the stored data to a variety types of data users upon receiving a data request from those users. The data users may include the participant business entities that constitute the system 10, non-participant business entities that do not constitute the system 10 but are authorized to use the system 10, and individual persons who are authorized to use the system 10.

The system 10 is configure to store confidential data on the off-chain (i.e., local servers), whereas public data is stored on the on-chain (i.e., a blockchain BC), as will be described later. Upon receiving a data request, the system 10 provides requested data to the data user by retrieving confidential data from a local server and public data from the blockchain BC. As shown in FIG. 1, the system 10 forms a blockchain consortium in which only authorized or permitted business entities BE (or consortiums) are allowed to participate. In this embodiment, the system 10 is formed of a plurality of business entities BE and an access gateway node 30. The access gateway node 30 is configured to serve as a gateway of the system 10 through which a data request from a data user is input into the system 10.

The participant business entities BE may include, but not necessarily limited to, automakers (OEMs), insurance companies, repair shops (or dealers), banks, and so on. Each business entity BE can serve as a node which forms a blockchain network 14 to store the public data of objects. Each business entity BE also serves as a local server that stores the confidential data of objects in its own database (DB). Therefore, each business entity BE operates in both on-chain layer and off-chain layer.

As shown in FIG. 1, the system 10 includes three business entities BE (an OEM, an insurance company, and a repair shop, for example) in this embodiment. Each business entity BE includes a consortium node 16 (hereinafter, referred to as a "node"), and a data storage server 26 (hereinafter, referred to as a "server") and all nodes 16 of the participant entities BE are connected to each other to form the blockchain network 14. All nodes 16 store and preserve the blockchain BC on which the public data of objects is recorded. More specifically, each node 16 is configured to store the public data in a public data storage 32 on the blockchain BC. Furthermore, the node 16 also stores data locations in a location table 34 and tamper proofs of the confidential data in a tamper proof storage 36 on the blockchain BC, as will be described later. It should be noted that the nodes 16 may work on a variety type of publicly-known platforms such as Ethereum, Hyperledger Fabric, or the like.

As shown in FIG. 2, the node 16 includes at least one processor (or a node processor 16a) and at least one memory (or a node memory 16b). In one aspect, the node processor 16a may be an electronic processor such as a microprocessor that is capable of performing various functions as described herein when executing programs stored on the node memory 16b. In one embodiment, the node memory 16b may be a random-access memory (RAM), read-only memory (ROM), a hard disk drive, a flash memory, or other suitable memory for storing programs. The programs are computer-readable instructions that, when executed by the node processor 16a, cause the node processor 16a to perform the various functions disclosed herein. Furthermore, some functions by the node processor 16a on the on-chain layer are provided via applications (apps) by executing smart contracts stored on the blockchain BC upon satisfying predetermined conditions, as will be described in detail below.

When the node 16 receives data related to an object from a data source, the node processor 16a is programmed to separate the data into confidential data and public data based on a data policy particularly predefined by each business entity BE. The data is provided to the node 16 in a form of a data set including a plurality of data items. The plurality of data items are categorized into one or more data categories. The data policy is a rule defining how data provided by data sources is treated (i.e., publicly stored on the blockchain BC or confidentially kept in the local server). Each business entity BE freely customizes the data policy according to its business purposes or requests from data sources. For example, the business entity BE may define the data policy to categorize personal data or personally-identifiable data for the data source as "confidential data." Furthermore, the data policy may be set to categorize data with a high business value for the business entity (e.g., a trade secret) as "confidential data." On the contrary, the data policy may be defined to categorize non-personal data or personally-unidentifiable data for the data source as "public data." Furthermore, the data policy may categorize data without a high business value as "public data."

FIG. 3 schematically shows data confidentially stored at each business entity BE and data publicly stored on the blockchain BC. In this example, the object is a particular car (referred to as "vehicle A") owned by an owner. The automaker (OEM) as one example of the business entities BE may collect vehicle related information of the vehicle A. The vehicle related information includes, for example, owner's information, speeds, locations, mileages, in-vehicle camera image data, and so on. In this example, the vehicle related information is the data category and the data items of owner's information, locations, and in-vehicle camera image data can be categorized as personal data or personally-identifiable data. Therefore, the node processor 16a categorizes these data items as "confidential data." On the contrary, since the data items of speeds and mileages are personally-unidentifiable data and thus can be publicly shared, the node processor 16a categorizes these data items as "public data." It should be noted that in this example, the owner of the vehicle A is a data source who provides the vehicle related information of the vehicle A.

The repair shop as another example of the business entities BE may collect, for example, two categories of the data, i.e., "repair item" and "repair bill information" regarding the vehicle A. The data category of the repair item may include "part A" and "part B" that are parts of the vehicle A repaired at the repair shop. The data category of the repair bill information may include, as data items, "repair fees" and "account information". In this example, all information of the data category of the repair item (i.e., part A and part B) are categorized as the public data by the node processor 16a since these data items do not have personal or personally-identifiable nature. On the contrary, in the data category of the repair bill information, all data items are categorized as the confidential data by the node processor 16a since such information should be confidentially kept. It should be noted that the repair shop (i.e., the node processor 16a) obtains these types of information when a mechanic or the like of the repair shop inputs the information into its DB after repair of the vehicle A was finished. Thus, such a mechanic is a data source in this example.

The insurance company is also another example of the business entity BE and the insurance company may collect one category of "insurance policy" which includes data items of "insured information," "insurance terms," and "payment information." In this example, the node processor 16a categorizes all the data items under the insurance policy as "confidential data" because such information should be also confidentially kept. It should be noted that the insurance company (i.e., the node processor) receives these data items when an employee of the insurance company inputs the information into its database after the insurance contract is formed. Thus, such an employee of the insurance company may serve as a data source.

After separating the received data into the confidential data and the public data, the node processor 16a is programmed to obtain a tamper proof of the confidential data. In this example, the tamper proof is a hash value calculated from the confidential data using a hash function. Furthermore, the node processor 16a is programmed to calculate a hash value of the confidential data for each category of the data. In the example of FIG. 3 as described above, the data category of "vehicle related information" includes three data items (i.e., the owner's information, the locations, and the in-vehicle camera information) as the confidential data. Thus, the node processor 16a calculates a hash value of all the three items using a hash function. Any publicly available hash functions may be used to calculate the hash value. Examples of such functions may include SHA-256 and SHA3-256.

The node processor 16a sends the public data and the tamper proof to a data manager 38 on the blockchain BC, which is an application (app) that runs when a smart contract is executed. The data manager 38 is programmed to store the public data in the public data storage 32 on the blockchain BC upon receiving the public data. The data manager 38 is also programmed to store the tamper proof of the confidential data in the tamper proof storage 36 on the blockchain BC. The data manager 38 stores, in the public data storage 32, the public data with its data category. As shown in FIG. 3, the data items of "speeds" and "mileages" are stored under the data category of the vehicle related information, and the data items of "part A" and "part B" are stored under the data category of the repair item. It should be noted since the data items under the data category of the insurance policy are categorized as "confidential data," these items are not stored in the public data storage 32 on the blockchain BC.

The data manager 38 is programmed to store, in the tamper proof storage 36, the tamper proof (i.e., a hash value) for each data category. In the example of FIG. 3, the data category of the vehicle related information has the tamper proof of "XXX," the data category of the repair bill information has the tamper proof of "YYY," and the data category of the insurance policy has the tamper proof of "ZZZ."

The node processor 16a is further programmed to store the location table 34 on the blockchain BC. The location table 34 is a table showing correspondence between the confidential data and their locations. The location table 34 is updated by the data manager 38 when the node 16 receives data from a data source. In the present embodiment, the location table 34 indicates the location of the confidential data for each data category. In the above-described example shown in FIG. 3, the location table 34 shows that the data category of "repair bill information" is located (i.e., stored) at the repair shop. Furthermore, the location table 34 shows that the data category of "vehicle related information" and the data category of "insurance policy" are located (i.e., stored) at the OEM and the insurance company, respectively. As shown in this example, the location table 34 does not list the data items themselves.

The node processor 16a is further programmed to verify whether the data request is endorsed. This endorsement is performed by confirming whether the data request includes a certificate certifying that the data user is properly authorized to obtain data through the system 10. If the data request is determined to be endorsed, the node processor 16a is programmed to instruct the server 26 to retrieve and provide the requested confidential data to the data user.

The access gateway node 30 serves as a gateway through which a data request is received and forwarded to a proper business entity BE (more specifically, a proper node 16) which stores the confidential data requested by the data request. As with the node 16 of the business entity BE, the access gateway node 30 includes at least one processor and at least one memory (not illustrated). When the access gateway node 30 receives a data request from a data user, the access gateway node 30 obtains a data location of the requested confidential data from the location table 34 through the data manager 38. In the present embodiment, data is requested for each data category by the data request, and the data manager 38 obtains a data location of the requested data category by referring to the location table 34. Then, the data manager 38 sends the obtained data location to the access gateway node 30. The access gateway node 30 is configured to forward the data request to the node that is identified by the data location.

The access gateway node 30 is also configured to obtain the public data and the tamper proof of the confidential data thorough the data manager 38. For example, if a data user requests for data under the data category of the vehicle related information, the data manager 38 obtains the data items of "speeds" and "mileages" from the public data storage 32. The data manager 38 also obtains the tamper proof "XXX" of the vehicle related information from the tamper proof storage 36. Then, the data manager 38 sends the obtained public data and the tamper proof to the access gateway node 30. The access gateway node 30 sends the public data and the tamper proof to the data user. As described later, the tamper proof is used by the data user to verify whether the confidential data has not tampered since the data was stored. The obtained tamper proof is also sent to the business entity BE where the requested confidential data is stored.

Each business entity BE includes the server 26 (i.e., a local server) having a database (DB) 28. The confidential data sent from the node 16 is stored in the DB 28. As shown in FIG. 2, the server 26 includes at least one processor (or a server processor 26a) and at least one memory (or a server memory 26b). The server processor 26a may be a microprocessor that is capable of performing various functions as described herein when executing programs stored on the server memory 26b. The server memory 26b may be a random-access memory (RAM), read-only memory (ROM), a hard disk drive, a flash memory, or other suitable memory for storing programs. The programs are computer-readable instructions that, when executed by the server processor 26a, cause the server processor 26a to perform the various functions disclosed herein.

The server 26 of each business entity BE is configured to store the confidential data of one or more objects in the DB 28. The server 26 is also configured to update the confidential data upon receiving updated information from a data source. In the present embodiment, each server 26 stores one or more categories of data regarding an object in the DB 28, and each data category includes one or more data items that are sorted as the confidential data. The one or more data categories of the confidential data are unique for each server 26, and thus the one or more data categories of the confidential data stored in one server 26 are different from the data categories of the confidential data stored in the other servers 26. In the example of FIG. 2, the DB 28 stores data categorized into data category A and data category B. The data category A includes two data items (data item 1 and data item 2), whereas the category B includes one data item (data item 1).

More specifically, in the above-described example shown in FIG. 3, the server 26 (the DB 28) of the OEM stores the owner's information, the locations, and the in-vehicle camera image data as "confidential data" under the data category of the vehicle related information. The server 26 of the repair shop stores the repair fees and the account information as "confidential data" under the data category of the repair bill information. The server 26 of the insurance company stores the insured information, the insurance terms, and the payment information as "confidential data" under the data category of the insurance policy.

The server processor 26a is programmed to retrieve the confidential data requested by the data request when receiving an instruction from the node processor 16a. The server processor 26a is also programmed to calculate a hash value of the retrieved confidential data and to compare the calculated hash value to the tamper proof received from the access gateway node 30. The server processor 26a is programmed to send the retrieved confidential data to the data user only if the hash value matches the tamper value (i.e., only if the retrieved confidential data is determined not to be tampered).

Next, one example of the entire process performed by the system 10 according to the present embodiment will be described. Generally, the system 10 performs a data storing process when data is provided by a data source and a data providing process when a data requested is issued by a data user. The data storing process will be described first with reference to FIGS. 1 and 4. In FIG. 1, the flow of data at the data storing process is indicated by dark arrows. In the following description, it is assumed that an owner of the vehicle A provides a data set regarding the vehicle A to the OEM as described in FIG. 3. The provided data is formed of a single data category of the vehicle related information including owner's information, locations, in-vehicle camera image data, speeds, and mileages.

When the node 16 of the OEM receives the data from the owner at Step 10, the data storing process starts. At Step 20, the node processor 16a separates the data into the confidential data and the public data according to the data policy predefined in advance. In this example, the node processor 16a categorizes the owner's information, the locations, and the in-vehicle camera image data as the confidential data. On the contrary, the node processor 16a categorizes the remaining data (i.e., the speeds and the mileages) as the public data. Then, the node processor 16a obtains the tamper proof of the confidential data for each data category at Step 30. In this example, the node processor 16a calculates a hash value of all the confidential data (i.e., the owner's information, the locations, and the in-vehicle camera image data) as the tamper proof.

Next, the node processor 16a sends the tamper proof and the public data (i.e., the speeds and the mileages) to the data manager 38 at Step 40. Then, the data manager 38 stores the public data and the tamper proof in the public data storage 32 and the tamper proof storage 36, respectively, at Step 50. In this example, the speeds and the mileages are stored in the public data storage 32 under the data category of the vehicle related information as shown in FIG. 3. The tamper proof (YYY) of the confidential data (i.e., the owner's information, the locations, and the in-vehicle camera image data) is stored in the tamper proof storage 36 under the data category of the vehicle related information. The data manager 38 also stores a data location (i.e., the OEM) of the data category of the vehicle related information in the location table 34 at Step 60.

Next, the node processor 16a sends the confidential data (i.e., the owner's information, the locations, and the in-vehicle camera image data) to the server 26 of the OEM at Step 70. When the server 26 receives the confidential data, the server 26 stores the confidential data in the DB 28 at Step 80. Then, the data storing process ends.

As described above, the node processor 16a separates the received data into the confidential data and the public data according to the data policy. Therefore, only the public data is stored on the blockchain BC and the confidential data is kept in the server 26 at the business entity BE. Thus, the confidential data can be confidentially kept at each business entity BE. Furthermore, by setting the data policy, each business entity BE can freely categorize the data as the confidential data and the public data. Thus, the business entity BE can flexibly treat the data according to its business purposes or value of the data. Further, the server 26 stores only the confidential data in own DB 28 and the remaining public data is stored on the blockchain BC. Thus, it is possible to reduce the volume of data stored at each server 26, thereby increasing storage efficiency and reducing costs.

The tamper proofs and the public data are stored in the tamper proof storage 36 and the public data storage, respectively, on the blockchain BC. Thus, the tamper proofs and the public data can be securely stored with a low risk of illegal or unauthorized change.

Next, the data providing process will be described with reference to FIGS. 1 and 5. In FIG. 1, the flow of data at the data providing process is indicated by white arrows. In the following description, it is assumed that the insurance company issues a data request to obtain data related to repair of the vehicle A. In this case, the data request includes a request to obtain the two data categories of the repair bill information and the repair item. The data request also includes a certificate certifying that the insurance company has been authorized to obtain data through the system 10. Therefore, in this example, the insurance company serves as both the data user and one business entity BE constituting the system 10.

When the access gateway node 30 receives the data request from the insurance company at Step 100, the data providing process starts. The access gateway node 30 sends an instruction to the data manager 38 to obtain the data location of the confidential data of the requested data category, the public data of the requested data category, and the tamper proof of the confidential data of the requested data category at Step 110. In this example, the access gateway node 30 requests the data manager 38 to obtain the data location of the repair bill information requested by the data request. The access gateway node 30 also requests the data manager 38 to obtain the public data of the repair item requested by the data request. The access gateway node 30 further requests the data manager 38 to obtain the tamper proof of the repair bill information requested by the data request.

Upon receiving the instruction from the access gateway node 30, the data manager 38 obtains the data location of the repair bill information (i.e., the repair shop) by referring to the location table 34 at Step 120. The data manager 38 also obtains the public data of the repair item (i.e., part A and part B) and the tamper proof of the repair bill information (i.e., "YYY") from the public data storage 32 and the tamper proof storage 36, respectively, at Step 130. Then, the data manager 38 sends the obtained data location, public data, and tamper proof to the access gateway node 30 at Step 140.

When the access gateway node 30 receives the above-described information from the data manager 38, the access gateway node 30 sends the public data (i.e., part A and part B) and the tamper proof (i.e., "YYY") to the data user at Step 150. Next, the access gateway node 30 forwards the data request and the obtained tamper proof to the node 16 of the business entity BE that is identified by the obtained data location at Step 160. In this example, since the data location indicates the repair bill information is stored at the repair shop, the access gateway node 30 sends the data request and the tamper proof to the node 16 of the repair shop.

When the node 16 of the repair shop receives the data request from the access gateway node 30, the node processor 16a verifies whether the data request is endorsed based on the certificate included in the data request at Step 170. If the node processor 16a verifies that the data request is properly endorsed (Step 170: Yes), the process proceeds to Step 180. On the contrary, if the node processor 16a does not verify that the data request is properly endorsed (Step 170: No), the data providing process ends. In this example, since the insurance company (the data user) has been properly authorized, the process proceeds to Step 180.

At Step 180, the node processor 16a sends the server 26 an instruction to retrieve the requested confidential data. The node processor 16a also sends the server 26 the tamper proof received from the access gateway node 30. In this example, the data category of the repair bill information is requested by the data request, the node processor 16a instructs the server 26 to retrieve the data items categorized as the repair bill information. When the server 26 receives the instruction from the node processor 16a, the server processor 26a retrieves the requested confidential data from the DB 28 at Step 190. In this example, since the server 26 is instructed to retrieve the data items under the repair bill information, the server processor 26a retrieves the repair fees and the account information from the DB 28.

Next, the server processor 26a calculates a hash value of the retrieved confidential data at Step 200. In this example, the server processor 26a calculates the hash value of the repair fees and the account information using a hash function. Then, the server processor 26a verifies whether the retrieved confidential data is not tampered at Step 210. More specifically, the server processor compares the calculated hash value to the tamper proof received from the access gateway node 30. Then, if the calculated hash value matches the tamper proof, the server processor 26a verifies that the retrieved confidential data is not tampered (Step 210: Yes), and the process proceeds to Step 220. On the contrary, if the calculated hash value does not match the tamper proof, the server processor 26a determines that the retrieved confidential data has been tampered (Step 210: No), and the data providing process ends. At Step 220, the server processor 26a sends the retrieved confidential data to the data user. In this case, the server processor 26a sends the repair fees and the account information to the insurance company. Then, the data providing process ends.

As described above, according to the system 10 of the present embodiment, the data user obtains the requested data together with the tamper proof of the confidential data. Thus, the data user can verify whether the confidential data has not been tampered by calculating a hash value of the obtained confidential data and comparing the tamper proof to the calculated hash value. Further, the server 26 confirms that the retrieved confidential data is not tampered before sending the confidential data to the data user. Thus, the system 10 can provide the requested confidential data with a very low risk of tampering.

The access gateway node 30 obtains a data location of confidential data from the location table 34. Thus, the access gateway node 30 can identify the proper business entity BE that stores the requested confidential data based on the data location.

### (Modifications to the embodiment)

In the above-described embodiment, the access gateway node 30 dedicatedly receives a data request and handle the data request. However, the nodes 16 of the business entities BE may perform the same function as the access gateway node 30. In this case, the access gateway node 30 may be eliminated. Furthermore, the access gateway node 30 may be configured to receive data from a data source and distribute the received data to the proper business entity BE.

In the above-described embodiment, the access gateway node 30 obtains the tamper proof and sends it to the node 16 of the business entity BE. However, the node 16 may directly obtain the tamper proof through the data manager 38 to verify the confidential data is not tampered. In the above-described embodiment, a plurality of business entities BE constitute the system 10. However, a single business entity may constitute the system 10.

In the above-described embodiment, a data user issues a data request by designating one or more data categories. However, the data request may be done for each data item instead of designating one or more data categories.

## Claims

1. A data storage system, comprising:
a plurality of nodes (16, 30) each configured to store a blockchain (BC);
a plurality of data storage servers (26) each corresponding to a respective one of the plurality of nodes (16); and
an access gateway node (30), wherein
each of the nodes (16, 30) is further configured to, upon receiving the data from a data source:
separate the data into confidential data and public data;
obtain a tamper proof of the confidential data;
send the confidential data to the data storage servers (26);
store the public data and the tamper proof on the blockchain (BC); and
store a location table (34) showing a correspondence between a data location of and each confidential data on the blockchain (BC), and
each of the data storage servers (26) is configured to store the confidential data upon receiving the confidential data from the nodes (16, 30), wherein the confidential data is different from that of other servers,
each of the nodes (16, 30) is further configured to, upon receiving a data request through the access gateway node (30) from a data user:
obtain the tamper proof of the confidential data corresponding to the data request from the blockchain (BC);
obtain the public data corresponding to the data request from the blockchain (BC); and
send the tamper proof and the public data to the data user,
each of the data storage servers (26) is further configured to send the confidential data corresponding to the data request to the data user upon receiving the data request from the data user, and
the access gateway node (30) is configured to upon receiving the data request from the data user,
send, to the data user, the public data and the tamper proof that are obtained from the blockchain (BC),
obtain the data location of the confidential data corresponding to the data request by referring to the location table (34); and
send the data request to one of the plurality of servers that stores the requested confidential data based on the obtained data location.

2. The data storage system according to claim 1, wherein
each of the nodes (16, 30) is further configured to send the tamper proof to the data storage servers (26) upon receiving the data request from the data user, and
each of the data storage servers (26) is further configured to:
determine whether the confidential data is tampered using the tamper proof; and
send the confidential data to the data user upon determining that the confidential data is not tampered.

3. The data storage system according to claim 1 or 2, wherein
the tamper proof is obtained by calculating a hash value of the confidential data.

4. A method for storing data for a data storage system including a plurality of nodes (16, 30), a plurality of data storage servers (26) each corresponding to a respective one of the plurality of nodes (16), and an access gateway node (30), the method comprising:
separating, with the nodes (16, 30), data received from a data source into confidential data and public data;
obtaining, with the nodes, a tamper proof of the confidential data;
storing, with the nodes, the public data and the tamper proof on a blockchain (BC);
storing, with the nodes, a location table (34) showing a correspondence between a data location and each confidential data on the blockchain (BC); and
storing the confidential data in the data storage servers (26), wherein the confidential data is different from that of other servers,
the method further comprises, upon receiving a data request from a data user through the access gateway node (30):
obtaining, with the nodes, the tamper proof of the confidential data corresponding to the data request from the blockchain (BC);
obtaining, with the nodes, the public data corresponding to the data request from the blockchain (BC);
sending, with the nodes, the tamper proof and the public data to the data user;
sending, with the data storage servers, the confidential data corresponding to the data request to the data user,
sending, with the access gateway node, to the data user, the public data and the tamper proof that are obtained from the blockchain (BC),
obtaining, with the access gateway node, the data location of the confidential data corresponding to the data request by referring to the location table (34); and
sending, with the access gateway node, the data request to one of the plurality of servers that stores the requested confidential data based on the obtained data location.

5. The method according to claim 4, further comprising:
determining whether the confidential data stored in the data storage servers (26) is tampered using the tamper proof obtained from the blockchain (BC); and
sending the confidential data to the data user upon determining that the confidential data is not tampered.

6. A computer-readable non-transitory storage medium storing a computer program for a data storage system including a plurality of nodes (16, 30), a plurality of data storage servers (26) each corresponding to a respective one of the plurality of nodes (16), and an access gateway node (30), the computer program configured to cause at least one processor (16a, 26a) to:
separate data received from a data source into confidential data and public data;
obtain a tamper proof of the confidential data;
store the public data and the tamper proof on a blockchain;
store a location table (34) showing a correspondence between a data location and each confidential data on the blockchain (BC); and
store the confidential data in the data storage servers (26), wherein the confidential data is different from that of other servers,
the computer program further causes the at least one processor to, upon receiving a data request from a data user through the access gateway node (30):
obtain the tamper proof of the confidential data corresponding to the data request from the blockchain (BC);
obtain the public data corresponding to the data request from the blockchain (BC);
send the tamper proof and the public data to the data user;
send the confidential data corresponding to the data request to the data user,
send, to the data user, the public data and the tamper proof that are obtained from the blockchain (BC),
obtain, with the access gateway node, the data location of the confidential data corresponding to the data request by referring to the location table (34); and
send, with the access gateway node, the data request to one of the plurality of servers that stores the requested confidential data based on the obtained data location.

7. The computer-readable non-transitory storage medium according to claim 6 further configured to cause the at least one processor (16a, 26a) to:
determine whether the confidential data stored in the data storage servers (26) is tampered using the tamper proof obtained from the blockchain (BC); and
send the confidential data to the data user upon determining that the confidential data is not tampered.

## Patentansprüche

1. Datenspeichersystem, das aufweist:
eine Vielzahl von Knoten (16, 30), die jeweils konfiguriert sind, um eine Blockchain (BC) zu speichern;
eine Vielzahl von Datenspeicherservern (26), die jeweils einem jeweiligen der Vielzahl von Knoten (16) entsprechen; und
einen Zugangs-Gateway-Knoten (30), wobei
jeder der Knoten (16, 30) des Weiteren konfiguriert ist, um bei Empfang der Daten von einer Datenquelle:
die Daten in vertrauliche Daten und öffentliche Daten zu trennen;
einen Manipulationsnachweis der vertraulichen Daten zu erhalten;
die vertraulichen Daten an die Datenspeicherserver (26) zu senden;
die öffentlichen Daten und den Manipulationsnachweis auf der Blockchain (BC) zu speichern; und
eine Standorttabelle (34), die eine Entsprechung zwischen einem Datenstandort und jeweiligen vertraulichen Daten zeigt, auf der Blockchain (BC) zu speichern, und
jeder der Datenspeicherserver (26) konfiguriert ist, um bei Empfang der vertraulichen Daten von den Knoten (16, 30) die vertraulichen Daten zu speichern, wobei sich die vertraulichen Daten von denen anderer Server unterscheiden,
jeder der Knoten (16, 30) des Weiteren konfiguriert ist, um bei Empfang einer Datenanforderung durch den Zugangs-Gateway-Knoten (30) von einem Datenbenutzer:
den Manipulationsnachweis der vertraulichen Daten entsprechend der Datenanforderung von der Blockchain (BC) zu erhalten;
die öffentlichen Daten entsprechend der Datenanforderung von der Blockchain (BC) zu erhalten; und
den Manipulationsnachweis und die öffentlichen Daten an den Datenbenutzer zu senden,
jeder der Datenspeicherserver (26) des Weiteren konfiguriert ist, um bei Empfang der Datenanforderung von dem Datenbenutzer die vertraulichen Daten entsprechend der Datenanforderung an den Datenbenutzer zu senden, und
der Zugangs-Gateway-Knoten (30) konfiguriert ist, um bei Empfang der Datenanforderung von dem Datenbenutzer,
die öffentlichen Daten und den Manipulationsnachweis, die von der Blockchain (BC) erhalten werden, an den Datenbenutzer zu senden,
den Datenstandort der vertraulichen Daten entsprechend der Datenanforderung durch Bezugnahme auf die Standorttabelle (34) zu erhalten; und
die Datenanforderung basierend auf dem erhaltenen Datenstandort an einen der Vielzahl von Servern, der die angeforderten vertraulichen Daten speichert, zu senden.

2. Datenspeichersystem nach Anspruch 1, wobei
jeder der Knoten (16, 30) des Weiteren konfiguriert ist, um bei Empfang der Datenanforderung von dem Datenbenutzer den Manipulationsnachweis an die Datenspeicherserver (26) zu senden, und
jeder der Datenspeicherserver (26) des Weiteren konfiguriert ist, um:
unter Verwendung des Manipulationsnachweises zu bestimmen, ob die vertraulichen Daten manipuliert wurden; und
die vertraulichen Daten an den Datenbenutzer zu senden, wenn es bestimmt wird, dass die vertraulichen Daten nicht manipuliert wurden.

3. Datenspeichersystem nach Anspruch 1 oder 2, wobei
der Manipulationsnachweis durch Berechnen eines Hash-Wertes der vertraulichen Daten erhalten wird.

4. Verfahren zum Speichern von Daten für ein Datenspeichersystem, das eine Vielzahl von Knoten (16, 30), eine Vielzahl von Datenspeicherservern (26), die jeweils einem jeweiligen der Vielzahl von Knoten (16) entsprechen, und einen Zugangs-Gateway-Knoten (30) enthält, wobei das Verfahren aufweist:
ein Trennen, mit den Knoten (16, 30), von Daten, die von einer Datenquelle empfangen werden, in vertrauliche Daten und öffentliche Daten;
ein Erhalten, mit den Knoten, eines Manipulationsnachweises der vertraulichen Daten;
ein Speichern, mit den Knoten, der öffentlichen Daten und des Manipulationsnachweises auf einer Blockchain (BC);
ein Speichern, mit den Knoten, einer Standorttabelle (34), die eine Entsprechung zwischen einem Datenstandort und jeweiligen vertraulichen Daten zeigt, auf der Blockchain (BC); und
ein Speichern der vertraulichen Daten in den Datenspeicherservern (26), wobei sich die vertraulichen Daten von denen anderer Server unterscheiden,
das Verfahren des Weiteren aufweist, bei Empfang einer Datenanforderung von einem Datenbenutzer durch den Zugangs-Gateway-Knoten (30):
ein Erhalten, mit den Knoten, des Manipulationsnachweises der vertraulichen Daten entsprechend der Datenanforderung von der Blockchain (BC);
ein Erhalten, mit den Knoten, der öffentlichen Daten entsprechend der Datenanforderung von der Blockchain (BC);
ein Senden, mit den Knoten, des Manipulationsnachweises und der öffentlichen Daten an den Datenbenutzer;
ein Senden, mit den Datenspeicherservern, der vertraulichen Daten entsprechend der Datenanforderung an den Datenbenutzer,
ein Senden, mit dem Zugangs-Gateway-Knoten, der öffentlichen Daten und des Manipulationsnachweises, die von der Blockchain (BC) erhalten werden, an den Datenbenutzer,
ein Erhalten, mit dem Zugangs-Gateway-Knoten, des Datenstandorts der vertraulichen Daten entsprechend der Datenanforderung durch Bezugnahme auf die Standorttabelle (34); und
ein Senden, mit dem Zugangs-Gateway-Knoten, der Datenanforderung basierend auf dem erhaltenen Datenstandort an einen der Vielzahl von Servern, der die angeforderten vertraulichen Daten speichert.

5. Verfahren nach Anspruch 4, das des Weiteren aufweist:
ein Bestimmen, ob die in den Datenspeicherservern (26) gespeicherten vertraulichen Daten manipuliert wurden, unter Verwendung des von der Blockchain (BC) erhaltenen Manipulationsnachweises; und
ein Senden der vertraulichen Daten an den Datenbenutzer, wenn es bestimmt wird, dass die vertraulichen Daten nicht manipuliert wurden.

6. Computerlesbares nichtflüchtiges Speichermedium, das ein Computerprogramm für ein Datenspeichersystem speichert, das eine Vielzahl von Knoten (16, 30), eine Vielzahl von Datenspeicherservern (26), die jeweils einem jeweiligen der Vielzahl von Knoten (16) entsprechen, und einen Zugangs-Gateway-Knoten (30) enthält, wobei das Computerprogramm konfiguriert ist, um mindestens einen Prozessor (16a, 26a) zu veranlassen, um:
Daten, die von einer Datenquelle empfangen werden, in vertrauliche Daten und öffentliche Daten zu trennen;
einen Manipulationsnachweis der vertraulichen Daten zu erhalten;
die öffentlichen Daten und den Manipulationsnachweis auf einer Blockchain zu speichern;
eine Standorttabelle (34), die eine Entsprechung zwischen einem Datenstandort und jeweiligen vertraulichen Daten zeigt, auf der Blockchain (BC) zu speichern; und
die vertraulichen Daten in den Datenspeicherservern (26) zu speichern, wobei sich die vertraulichen Daten von denen anderer Server unterscheiden,
das Computerprogramm des Weiteren den mindestens einen Prozessor veranlasst, um bei Empfang einer Datenanforderung von einem Datenbenutzer durch den Zugangs-Gateway-Knoten (30):
den Manipulationsnachweis der vertraulichen Daten entsprechend der Datenanforderung von der Blockchain (BC) zu erhalten;
die öffentlichen Daten entsprechend der Datenanforderung von der Blockchain (BC) zu erhalten;
den Manipulationsnachweis und die öffentlichen Daten an den Datenbenutzer zu senden;
die vertraulichen Daten entsprechend der Datenanforderung an den Datenbenutzer zu senden,
die öffentlichen Daten und den Manipulationsnachweis, die von der Blockchain (BC) erhalten werden, an den Datenbenutzer zu senden,
mit dem Zugangs-Gateway-Knoten den Datenstandort der vertraulichen Daten entsprechend der Datenanforderung durch Bezugnahme auf die Standorttabelle (34) zu erhalten; und
mit dem Zugangs-Gateway-Knoten die Datenanforderung basierend auf dem erhaltenen Datenstandort an einen der Vielzahl von Servern, der die angeforderten vertraulichen Daten speichert, zu senden.

7. Computerlesbares nichtflüchtiges Speichermedium nach Anspruch 6, das des Weiteren konfiguriert ist, um den mindestens einen Prozessor (16a, 26a) zu veranlassen, um:
unter Verwendung des von der Blockchain (BC) erhaltenen Manipulationsnachweises zu bestimmen, ob die in den Datenspeicherservern (26) gespeicherten vertraulichen Daten manipuliert wurden; und
die vertraulichen Daten an den Datenbenutzer zu senden, wenn es bestimmt wird, dass die vertraulichen Daten nicht manipuliert wurden.

## Revendications

1. Système de stockage de données, comprenant :
une pluralité de nœuds (16, 30), chacun configuré pour stocker une blockchain (BC) ;
une pluralité de serveurs de stockage de données (26), chacun correspondant à un respectif de la pluralité de nœuds (16) ; et
un nœud de passerelle d'accès (30), dans lequel
chacun des nœuds (16, 30) est en outre configuré pour, lors de la réception des données à partir d'une source de données :
séparer les données en données confidentielles et données publiques ;
obtenir une preuve de falsification des données confidentielles ;
envoyer les données confidentielles aux serveurs de stockage de données (26) ;
stocker les données publiques et la preuve de falsification sur la blockchain (BC) ; et
stocker une table de localisation (34) montrant une correspondance entre un emplacement de données et chaque donnée confidentielle sur la blockchain (BC), et
chacun des serveurs de stockage de données (26) est configuré pour stocker les données confidentielles lors de la réception des données confidentielles à partir des nœuds (16, 30), dans lequel les données confidentielles sont différentes de celles d'autres serveurs,
chacun des nœuds (16, 30) est en outre configuré pour, lors de la réception d'une demande de données via le nœud de passerelle d'accès (30) à partir d'un utilisateur de données :
obtenir la preuve de falsification des données confidentielles correspondant à la demande de données à partir de la blockchain (BC) ;
obtenir les données publiques correspondant à la demande de données à partir de la blockchain (BC) ; et
envoyer la preuve de falsification et les données publiques à l'utilisateur de données,
chacun des serveurs de stockage de données (26) est en outre configuré pour envoyer les données confidentielles correspondant à la demande de données à l'utilisateur de données lors de la réception de la demande de données à partir de l'utilisateur de données, et
le nœud de passerelle d'accès (30) est configuré pour, lors de la réception de la demande de données à partir de l'utilisateur de données,
envoyer, à l'utilisateur de données, les données publiques et la preuve de falsification qui sont obtenues à partir de la blockchain (BC),
obtenir l'emplacement de données des données confidentielles correspondant à la demande de données en se référant à la table de localisation (34) ; et
envoyer la demande de données à l'un de la pluralité de serveurs qui stocke les données confidentielles demandées sur la base de l'emplacement de données obtenu.

2. Système de stockage de données selon la revendication 1, dans lequel
chacun des nœuds (16, 30) est en outre configuré pour envoyer la preuve de falsification aux serveurs de stockage de données (26) lors de la réception de la demande de données à partir de l'utilisateur de données, et
chacun des serveurs de stockage de données (26) est en outre configuré pour :
déterminer si les données confidentielles sont falsifiées à l'aide de la preuve de falsification ; et
envoyer les données confidentielles à l'utilisateur de données lorsqu'il est déterminé que les données confidentielles ne sont pas falsifiées.

3. Système de stockage de données selon la revendication 1 ou 2, dans lequel la preuve de falsification est obtenue en calculant une valeur de hachage des données confidentielles.

4. Procédé de stockage de données pour un système de stockage de données incluant une pluralité de nœuds (16, 30), une pluralité de serveurs de stockage de données (26) correspondant chacun à un respectif de la pluralité de nœuds (16), et un nœud de passerelle d'accès (30), le procédé comprenant :
la séparation, avec les nœuds (16, 30), de données reçues à partir d'une source de données en données confidentielles et données publiques ;
l'obtention, avec les nœuds, d'une preuve de falsification des données confidentielles ;
le stockage, avec les nœuds, des données publiques et de la preuve de falsification sur une blockchain (BC) ;
le stockage, avec les nœuds, d'une table de localisation (34) montrant une correspondance entre un emplacement de données et chaque donnée confidentielle sur la blockchain (BC) ; et
le stockage des données confidentielles dans les serveurs de stockage de données (26), dans lequel les données confidentielles sont différentes de celles d'autres serveurs,
le procédé comprend en outre, lors de la réception d'une demande de données à partir d'un utilisateur de données via le nœud de passerelle d'accès (30) :
l'obtention, avec les nœuds, de la preuve de falsification des données confidentielles correspondant à la demande de données à partir de la blockchain (BC) ;
l'obtention, avec les nœuds, des données publiques correspondant à la demande de données à partir de la blockchain (BC) ;
l'envoi, avec les nœuds, de la preuve de falsification et des données publiques à l'utilisateur de données ;
l'envoi, avec les serveurs de stockage de données, des données confidentielles correspondant à la demande de données à l'utilisateur de données,
l'envoi, avec le nœud de passerelle d'accès, à l'utilisateur de données, des données publiques et de la preuve de falsification qui sont obtenues à partir de la blockchain (BC),
l'obtention, avec le nœud de passerelle d'accès, de l'emplacement de données des données confidentielles correspondant à la demande de données en se référant à la table de localisation (34) ; et
l'envoi, avec le nœud de passerelle d'accès, de la demande de données à l'un de la pluralité de serveurs qui stocke les données confidentielles demandées sur la base de l'emplacement de données obtenu.

5. Procédé selon la revendication 4, comprenant en outre :
le fait de déterminer si les données confidentielles stockées dans les serveurs de stockage de données (26) sont falsifiées à l'aide de la preuve de falsification obtenue à partir de la blockchain (BC) ; et
l'envoi des données confidentielles à l'utilisateur de données lorsqu'il est déterminé que les données confidentielles ne sont pas falsifiées.

6. Support de stockage non transitoire lisible par ordinateur stockant un programme informatique pour un système de stockage de données incluant une pluralité de nœuds (16, 30), une pluralité de serveurs de stockage de données (26) correspondant chacun à un respectif de la pluralité de nœuds (16), et un nœud de passerelle d'accès (30), le programme informatique étant configuré pour amener au moins un processeur (16a, 26a) à :
séparer les données reçues à partir d'une source de données en données confidentielles et données publiques ;
obtenir une preuve de falsification des données confidentielles ;
stocker les données publiques et la preuve de falsification sur une blockchain ;
stocker une table de localisation (34) montrant une correspondance entre un emplacement de données et chaque donnée confidentielle sur la blockchain (BC) ; et
stocker les données confidentielles dans les serveurs de stockage de données (26), dans lequel les données confidentielles sont différentes de celles d'autres serveurs,
le programme informatique amène en outre le au moins un processeur à, lors de la réception d'une demande de données à partir d'un utilisateur de données via le nœud de passerelle d'accès (30) :
obtenir la preuve de falsification des données confidentielles correspondant à la demande de données à partir de la blockchain (BC) ;
obtenir les données publiques correspondant à la demande de données à partir de la blockchain (BC) ;
envoyer la preuve de falsification et les données publiques à l'utilisateur de données ;
envoyer les données confidentielles correspondant à la demande de données à l'utilisateur de données,
envoyer, à l'utilisateur de données, les données publiques et la preuve de falsification qui sont obtenues à partir de la blockchain (BC),
obtenir, avec le nœud de passerelle d'accès, l'emplacement de données des données confidentielles correspondant à la demande de données en se référant à la table de localisation (34) ; et
envoyer, avec le nœud de passerelle d'accès, la demande de données à l'un de la pluralité de serveurs qui stocke les données confidentielles demandées sur la base de l'emplacement de données obtenu.

7. Support de stockage non transitoire lisible par ordinateur selon la revendication 6 en outre configuré pour amener le au moins un processeur (16a, 26a) à :
déterminer si les données confidentielles stockées dans les serveurs de stockage de données (26) sont falsifiées à l'aide de la preuve de falsification obtenue à partir de la blockchain (BC) ; et
envoyer les données confidentielles à l'utilisateur de données lorsqu'il est déterminé que les données confidentielles ne sont pas falsifiées.
